# EUROPÄISCHE PATENTSCHRIFT

(11) **EP 0 945 944 B1**
(45) Veröffentlichungstag und Bekanntmachung des Hinweises auf die Patenterteilung: **17.08.2005**
(21) Anmeldenummer: 99104567.5
(22) Anmeldetag: 08.03.1999
(51) Int. Cl.: H02G 3/04, H02G 3/12

(54) **Kabelkanal**
Cabelduct
Canalisation pour cables

(30) Priorität: 26.03.1998 DE 29805506 U
(43) Veröffentlichungstag der Anmeldung: 29.09.1999
(73) Patentinhaber: Grün, Gerhard, 35794 Mengerskirchen (DE)
(72) Erfinder: Grün, Gerhard, 35794 Mengerskirchen (DE)
(74) Vertreter: Böck, Bernhard, Dipl.-Ing.

(56) Entgegenhaltungen:
- EP-A- 0 518 404
- DE-U- 9 205 245

## Beschreibung

Die Erfindung betrifft einen Kabelkanal für insbesondere elektrische Kabel und zur Aufnahme von Steckdosen, Schaltern und dergleichen an die Kabel anschließbaren Armaturen, mit einem etwa U-förmigen, aus einem Bodenstück und an diesem beiderseits abgekanteten Seitenstücken bestehenden Kanalbett und einem oder mehreren Deckeln, mit denen das Kanalbett zwischen den Armaturen verschließbar ist, wobei die Seitenstücke an ihren freien Längskanten jeweils zu mit dem Bodenstück flächenparallelen Deckenstreifen abgekantet sind, deren Endkanten aufeinander zu gerichtet sind und eine schlitzförmige Aufnahme für die Lagergehäuse der Armaturen und die Deckel begrenzen, wobei in der Aufnahme zwischen den Lagergehäusen jeweils eine oder mehrere Spannklammern halterbar sind und die Spannklammern mit Montageleisten und jeweils mit einem lose zwischen den Montageleisten angeordneten und an diesen anliegenden Deckel verrastbar sind.

Ein derartiger Kabelkanal ist aus der DE-U1-92 05 245 bekannt.

Derartige Kabelkanäle werden in Wohn- und Arbeitsräumen wandabhängig oder gelegentlich auch frei aufgehängt verwendet, um Verbindungs- oder Verlängerungskabel für Verbraucher so kurz wie möglich zu halten und Unterputz-Verlegung einzuschränken. Die Armaturen können zu diesem Zweck an beliebiger Stelle des Kabelkanals vorgesehen sein und bei Bedarf auch versetzt werden.

Die Kabelkanäle sind als metallene Profile ausgebildet, so daß sie kostengünstig und formsteif herstellbar sind. Um die Armaturen sicher zu befestigen, ist es bekannt, an dem Bodenstück, in der Regel einstückig, Halteschienen anzuformen, die zumeist als Winkelprofile ausgebildet sind und mit der Stegkante des einen Winkelsteges senkrecht an dem Bodenstück ansetzen, und bei denen der andere Winkelsteg zu dem Bodenstück flächenparallel von diesem beabstandet und so zum Befestigen eines Armaturen-Gehäuses geeignet ist. Bei solchen Kabelkanälen sind an die Seitenstücke eines Aufnahmeschlitzes jeweils für die Lagergehäuse der Armaturen Deckenstreifen angeformt, die mehrfach nach innen des Kabelkanals abgefaltet sind, um eine Anlagekante für an den Lagergehäusen befindliche Anschlagbünde und die Deckel zu gewinnen. Insgesamt sind diese Kabelkanäle relativ kompliziert konstruiert und damit nicht so wirtschaftlich herstellbar, wie es für einen derartigen Massenartikel eigentlich wünschenswert wäre, weil die erforderlichen Werkzeuge zu ihrer Herstellung umso teurer ausfallen, je mehr Abkantungen vorgesehen werden müssen. Die Art der Halterung der Einbauteile kann zu inneren Spannungen und zum Verzug des Kabelkanals führen.

Die Erfindung hat sich deshalb die Aufgabe gestellt, einen Kabelkanal der eingangs ausführlich beschriebenen Art so auszubilden, daß er bei hoher Formstabilität einfach aufgebaut und wirtschaftlich herstellbar ist.

Erfindungsgemäß wird die Aufgabe dadurch gelöst, daß die Deckenstreifen an ihren freien Längskanten nach innen und in Richtung auf das Bodenstück in die zueinander und zu den Seitenstücken flächenparallele, in freien Randkanten endende, dabei jeweils die schlitzförmige Aufnahme ausbildende, ebene Montageleisten abgekantet sind, und in den Montageleisten Durchbrüche vorzugsweise in enger Teilung vorgesehen sind, in denen an den Lagergehäusen und den Spannklammern angeformte Raststücke einrastbar sind.

An dem erfindungsgemäßen Kabelkanal sind nur noch wenige Abkantungen vorgesehen, die seine äußere, im Querschnitt rechteckige Kontur und die Aufnahme als simplen Längsschlitz ausbilden; die zugehörigen Montageleisten enden in einfachen Randkanten ohne weitere Abkantungen, und auch im Bereich des Bodenstückes sind keine abgefalteten Profile mehr erforderlich. Stattdessen gewinnt der Kabelkanal seine Formstabilität nunmehr aus den vergleichsweise kleinen und billig herzustellenden Spannklammern, die in relativ beliebiger Abfolge in der Aufnahme verrastbar sind; in Mehrfachausnutzung der Spannklammern dienen diese zugleich zur Halterung der zwischen den Lagergehäusen erforderlichen Deckel sowie im Kanalinneren befindliche Kabel.

Über die eigentliche Aufgabenstellung hinaus hat die Erfindung aber noch weitere Vorteile. So ist es beispielsweise möglich, auf eine spezielle Erdung der Deckel zu verzichten, weil diese über die (metallenen) Spannklammern leitend mit dem Kanalbett verbunden sind. Ferner können die Spannklammern an den stirnseitigen Enden von zusammengesetzten Kabelkanälen bequem miteinander leitend verbunden werden können, weil sie leicht zugänglich sind und führen hiermit weiterhin eine optisch saubere Stoßverbindung herbei.

Eine besonders praktische Befestigung der Lagergehäuse und Spannklammern an den Montageleisten kann dadurch gewonnen werden, daß in den Montageleisten Durchbrüche vorzugsweise in enger Teilung vorgesehen sind, in denen an den Lagergehäusen und Spannklammern angeformte Raststücke einrastbar sind. Bei einer solchen Ausführung genügt es, die Einbauteile für die Aufnahme einfach zwischen den Montageleisten in Richtung auf das Bodenstück abzusenken, bis eine hör- und/oder fühlbare Verrastung der Raststücke in den Durchbrüchen erfolgt ist.

Eine besonders bevorzugte Ausführung der Erfindung verwendet Spannklammern aus einem U-förmigen Mittelstück mit einem Stegblech und beiderseits gleichgerichtet abgekanteten, einander parallelen Gurtblechen, an denen jeweils mindestens eine elastische Rastlasche als Raststück angeformt ist. Dabei kann die Rastlasche in Richtung auf das Stegblech nach außen des Mittelstückes und an einem von dem Gurtblech abgekanteten Verbindungsstreifen und so abgebogen sein, daß sie von dem Gurtblech beabstandet und zu diesem etwa parallel ist.

Spannklammern dieser Art sind hochproduktiv und billig als Stanz- und Biegeteile herstellbar. Deren Funktion kann zudem auf die Halterung und Arretierung eines Deckels ausgedehnt werden, wenn an den Verbindungsstreifen jeweils mindestens eine elastische Spannlasche in Richtung auf das Stegblech nach außen des Mittelstückes und so abgebogen ist, daß sie zu dem Gurtblech etwa parallel ist und mit der Spannlasche einen Spalt zur rastenden Aufnahme des Deckels bildet; am besten ist es, wenn der Spalt die Montageleiste überfängt und an dem Deckel Randleisten ausgebildet sind, die unmittelbar an den Montageleisten anliegen.

Die Lagergehäuse sind relativ leicht von den Montageleisten wieder demontierbar, wenn an ihnen Haltekeile angeformt sind, welche als Raststücke dienen und so gerichtet sind, daß sie in Richtung auf das Bodenstück in den Durchbrüchen anschlagen, in Gegenrichtung aber aus den Durchbrüchen abziehbar sind.

Insgesamt ist durch die Erfindung ein sehr leichter und dabei trotzdem formstabiler Kabelkanal entstanden. Das Einsetzen der Lagergehäuse für die Armaturen und der Deckel in den Kabelkanal ruft in diesem keine inneren Spannungen hervor, weil die Lagergehäuse lediglich an den Montageleisten hängend befestigt und ohne Verbindung zu dem Bodenstück sind und die Deckel überhaupt nicht mehr an dem Kanalbett, sondern nur noch an den Spannklammern gehaltert sind, die im übrigen ebenfalls nur mit den relativ biegsamen, geringe Formänderungen kompensierenden Montageleisten verbunden sind. Innere Spannungen können bei einer solchen Verteilung kaum entstehen. Die Spannklammern leisten andererseits aber eine erheblichen Beitrag zur Formstabilität des Kabelkanals, der entsprechend dünnwandig dimensionierbar ausgeführt werden kann. Schließlich sorgen sie auch dafür, daß die in dem Kanalbett verlegten Kabel an deren Bodenstück geklemmt und so sicher gehaltert werden und dementsprechend den Einbau der Lagergehäuse nicht behindern können.

Weitere Vorteile und die näheren Einzelheiten der Erfindung werden nachstehend an Hand der Zeichnung an ei nem Ausführungsbeispiel näher erläutert. Es zeigt
- Fig.1: einen Kabelkanal nach der Erfindung in räumlicher Sprengdarstellung,
- Fig.2: in zwei Teilfig.2a,b einen vergrößerten Querschnitt durch einen Kabelkanal entsprechend Fig.1 im Bereich einer Armatur in der Vorderansicht und eine zugehörige Draufsicht,
- Fig.3: einen stark vergrößerten Querschnitt durch einen Kabelkanal entsprechend Fig.1 im Bereich eines Deckels und
- Fig.4: eine Spannklammer des erfindungsgemäßen Kabelkanals in drei Teilfig.4a-c mit einer Hauptansicht, einer Draufsicht des noch unvollkommenen abgefalteten Stanzteiles und einer Draufsicht,sämtlich in schematischer, vereinfachter Darstellung.

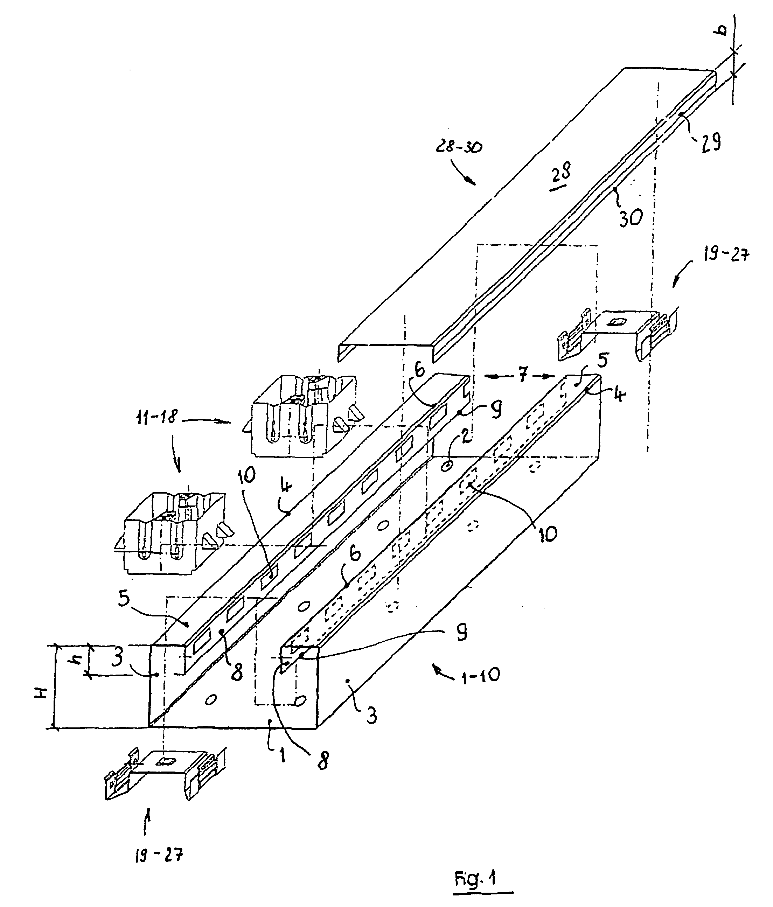

Ein erfindungsgemäßer Kabelkanal besteht (Fig.1) im wesentlichen aus einem Kanalbett 1-10 mit daran halterbaren (hier zwei) Lagergehäusen 11-18 für Armaturen, beispielsweise Steckdosen, und mit (hier ebenfalls zwei) Spannklammern 19-27 zur Halterung (hier) eines Deckels 28-30.

Das U-förmige Kanalbett 1-10 ist quer zu seiner Längsachse mehrfach abgefaltet. An einem Bodenstück 1 mit Durchbrechungen 2 für Halteschrauben zur Befestigung des Kanalbettes 1-10 - beispielsweise an einer Wand - sind (im rechten Winkel) zueinander parallele Seitenstücke 3 angeformt, an deren von dem Bodenstück 1 abgewandten, in einer Längskante 4 endenden Seite jeweils ein nach innen des Kabelkanals weisender Deckenstreifen 5, wiederum um 90° abgewinkelt, ansetzt; die zu der Längskante 4 parallelen Endkanten 6 der Deckenstreifen 5 begrenzen eine schlitzförmige Aufnahme 7. Die Flächen der Seitenstücke 3 und Deckenstreifen 5 sind homogen, in ihnen sind weder Durchbrüche vorgesehen noch sind andere Bauteile an ihnen befestigt.

Die Aufnahme 7 wird von zwei streifenförmigen Montageleisten 8 gebildet, die, an den Endkanten 6 beginnend, von den Deckenstreifen 5 so abgefaltet sind, daß sie zueinander und zu den Seitenstücken 3 flächenparallel sind und in Richtung auf das Bodenstück 1 weisen, jedoch mitten in dem Kanalbett 1-10 jeweils in einer Randkante 9 enden; ihre Höhe h hat in der Fig.1 etwa ein Drittel der Höhe H des Kanalbettes 1-10. In den Montageleisten 8 sind in deren ganzer Länge in relativ enger Teilung rechteckige Durchbrüche 10 eingebracht, die paarweise zur Halterung entweder eines Lagergehäuses 11-18 oder einer Spannklammer 19-27 dienen.

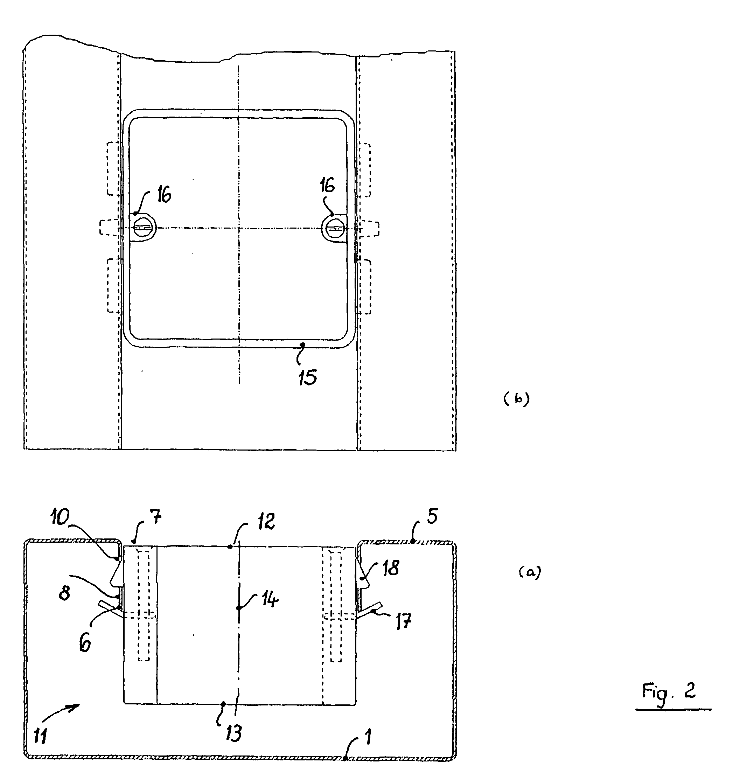

Das Lagergehäuse 11-18 weist entsprechend Fig.2 eine an ihren beiden Stirnseiten 12,13 offene Kapsel 11 in Form eines Rohres mit rechteckigem bzw. quadratischem, der Aufnahme 7 angepaßtem, in Richtung ihrer Längsachse 14 konstantem Querschnitt auf. Die Stirnseite 12 fluchtet etwa mit den Deckenstreifen 5, die Stirnseite 13 ist von dem Bodenstück 1 beabstandet. Zwei im Innern der Kapsel 11 gegenüberliegende, an die Kapselwandung 15 angeformte, zu der Längsachse 14 parallele Wandleisten 16 sind für Befestigungsschrauben zur Befestigung einer Armatur gedacht, beispielsweise und vorrangig einer Steckdose. Außen sind an der Kapselwandung 15 elastische Arretierlaschen 17 vorgesehen, die beim Einführen des Lagergehäuses 11-18 durch die Montageleisten 8 an der Kapselwandung 15 angelegt werden und schließlich beim Passieren der Endkanten 6 aufspreizen und an diesen eine Rückbewegung der Kapsel 11 sperren. An der Kapselwandung 15 beiderseits der Arretierlaschen 17 angeformte Haltekeile 18 dienen als Raststücke und rasten dabei jeweils in einen Durchbruch 10 ein. Die Neigung der Haltekeile 18 ist so gerichtet und in Richtung der Längsachse 14 von dem Arretierlaschen 17 beabstandet, daß das jeweilige Lagergehäuse 11-18 sicher arretiert ist.

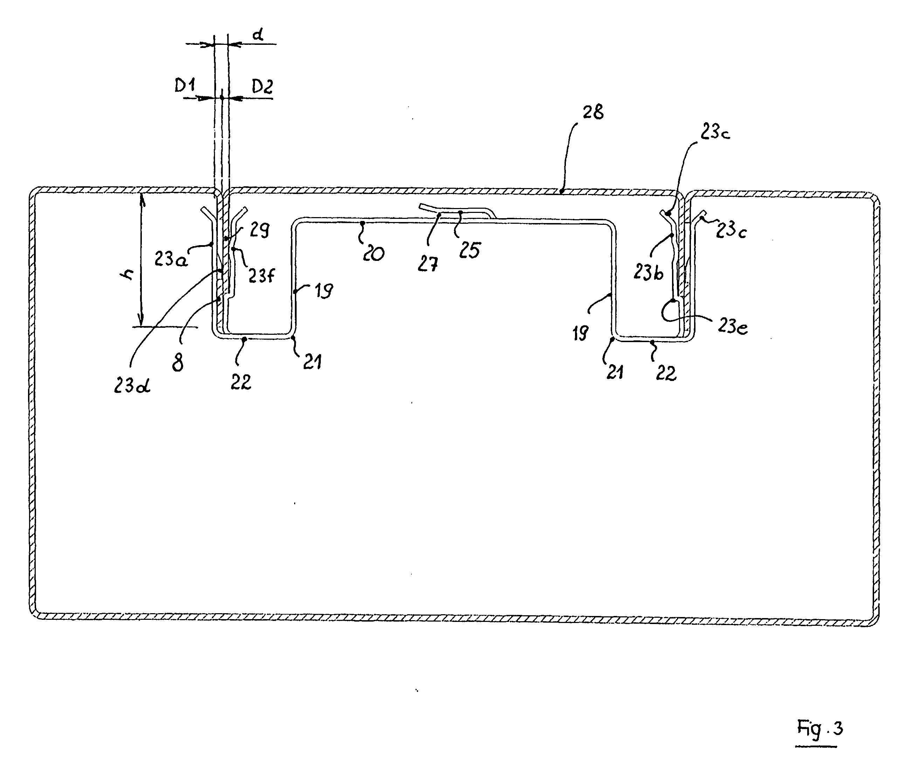

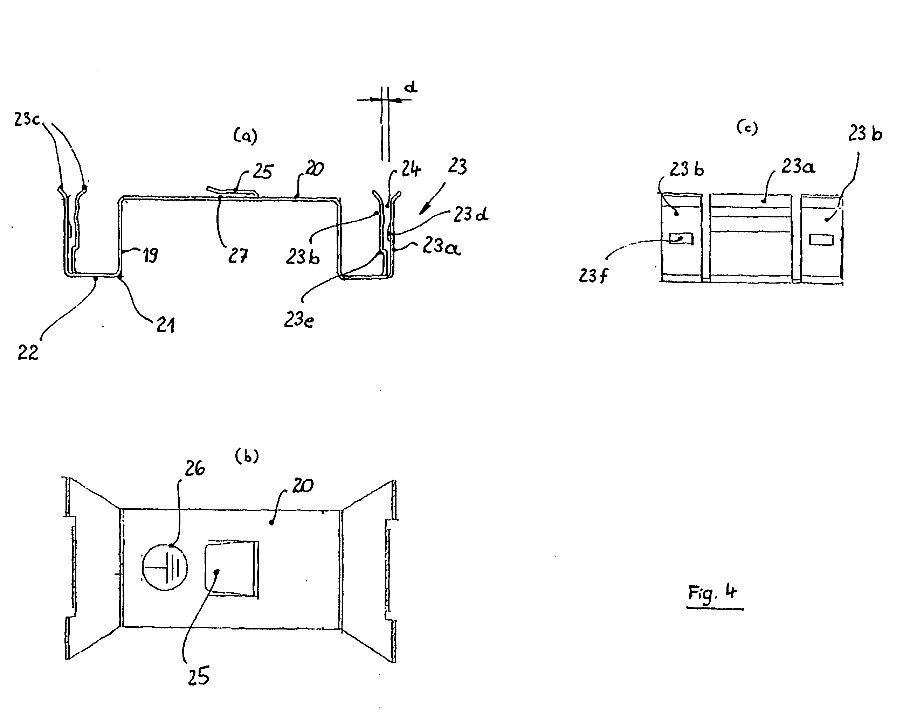

Die Spannklammern 19-27 für den erfindungsgemäßen Kabelkanal sind als Stanz- und Biegeteile gestaltet; in der Fig.3 ist eine solche Spannklammer 19-27 in geschnittenen Querschnitt zusammen mit einem an dem Kanalbett 1-10 gehalterten Deckel 28-30 dargestellt, in der Fig.4, in mehreren Ansichten, die Spannklammer 19-27 allein.

Ein U-förmiges, aus einem Stegblech 20 und zwei an dem Stegblech 20 im rechten Winkel und zueinander parallel abgekanteten Gurtblechen 19 bestehendes Mittelstück 19,20 ist an von dem Stegblech 20 abgewandten, parallelen Biegekanten 21 jeweils wiederum abgekantet in der Weise, daß - zu dem Mittelstück 19,20 umgekehrt U-förmige - Haltestreifen 22,23 ausgebildet werden. Die Haltestreifen 22,23 sind dabei an das Mittelstück 19,20 außen angeformt und bestehen - außer dem jeweiligen Gurtblech 19 - aus einem Verbindungsstreifen 22 und einem mehrteiligen Klemmstreifen 23. Die Klemmstreifen 23 enden etwa in Höhe des Stegbleches 20.

In der Fig.3 ist gut zu erkennen, daß dieses mehrfach abgekantete Profil der Spannklammer 19-27 mit dem Profil des daran befestigten Deckels 28-30 und der Höhe h der Montageleiste 8 so abgestimmt ist, daß diese Bauteile 19-27 und 8 eine geschlossene, kleinvolumige Konfiguration ausbilden, die nur einen relativ geringen Teil des in dem Kanalbett 1-10 verfügbaren Raumes einninmt.

Der Klemmstreifen 23 besteht aus einer als Raststück dienenden, mittigen Rastlasche 23a und je einer beiderseits der Rastlasche 23a vorgesehenen Spannlasche 23b, wie das besonders in der Seitensicht der Teilfig.4c gut zu erkennen ist. Die Spannlaschen 23b sind dabei von der Rastlasche 23a nach innen um die Dicke d (Teilfig.3,4a) versetzt aus dem Verbindungsstreifen 22 abgefaltet. Die Dicke d entspricht etwa der Summe aus der Dicke D1 der Montageleiste 8 und der Dicke D2 einer Randleiste 29 des Deckels 28-30, so daß diese aneinanderliegend in den Spalt 24 - mit Vorspannung - eingeschoben werden können (Fig.3). Zur Erleichterung sind dabei passende Einführungsschrägen 23c an der Rastlasche 23a und den Spannlaschen 23b vorgesehen.

An der Rastlasche 23a ist ein Rastblech 23d angeschlagen, das in einen Durchbruch 10 einrastet, wenn die Rastlasche 23a über die (dem benachbarten Seitenstück 3 zugewandte) Oberfläche der Montageleiste 8 gleitet, wenn die Spannklammer 19-27 an dem Kanalbett 1-10 befestigt wird. Die Spannlaschen 23b weisen jeweils eine als Anschlag für den Deckel 28-30 geeignete, nach innen in Richtung auf das benachbarte Gurtblech 19 abgekröpfte Querleiste 23e auf, an welcher jeweils eine an der Randleiste 29 ausgebildete Deckelkante 30 anschlägt. Eine an der Spannlasche 23b anschlagende Druckleiste 23f befindet sich nach der Montage der Spannklammer 19-27 etwa in Höhe der Durchbrüche 10. Die Klemmstreifen 23 sind so ausgebildet, daß ihre Elastizität eine sicher Arretierung der Spannklammer 19-27 an dem Kanalbett 1-10 und des Deckels 28-30 an der Spannklammer 19-27. sicherstellt.

Aus dem Stegblech 20 ist etwa mittig eine Klemmlasche 25 nach der dem Deckel 28-30 zugewandten Seite angedrückt. Sie dient, wie das an dem Stegblech 20 vorgesehene Symbol 26 (Teilfig.4b) verdeutlicht, zur Erdung des Kabelkanals, wenn dieser aus mehreren Teilstücken zusammengesetzt ist. Es genügt hierbei, in die von den Klemmlaschen 25 und den Stegblechen 20 gebildeten Klemmschlitze 27 jeweils ein verbindendes Blech einzuschieben.

Ein Deckel 28-30 entsprechend Fig.1,3 ist U-förmig abgefaltet und besteht aus einer Decke 28 und je einer beiderseits angeformten Randleiste 29, deren Breite b so bemessen ist, daß die Decke 28 mit den Deckenstreifen 5 des Kanalbettes 1-10 eine gemeinsame Ebene bildet, wenn die an den Randleisten 29 befindlichen Deckelkanten 30 an den Querleisten 23e anschlagen, wie oben bereits ausführlich dargelegt wurde.

### Aufstellung der verwendeten Bezugszeichen

- 1: Bodenstück
- 2: Durchbrechung
- 3: Seitenstück
- 4: Längskante
- 5: Deckenstreifen
- 6: Endkante
- 7: Aufnahme
- 8: Montageleiste
- 9: Randkante
- 10: Durchbruch
- 1-10: Kanalbett
- 11: Kapsel
- 12,13: Stirnseite
- 14: Längsachse
- 15: Kapselwandung
- 16: Wandleiste
- 17: Arretierlasche
- 18: Haltekeil, Raststück
- 11-18: Lagergehäuse
- 19: Gurtblech
- 20: Stegblech
- 19,20: Mittelstück
- 21: Biegekante
- 22: Verbindungsstreifen
- 23: Klemmstreifen
- 23a: Rastlasche, Raststück
- 23b: Spannlasche
- 23c: Einführungsschräge
- 23d: Rastblech
- 23e: Querleiste
- 23f: Druckleiste
- 22,23: Haltestreifen
- 24: Spalt
- 25: Klemmlasche
- 26: Symbol
- 27: Klemmschlitz
- 19-27: Spannklammer
- 28: Decke
- 29: Randleiste
- 30: Deckelkante
- 28-30: Deckel

- h,H: Höhe
- d,D1,D2: Dicke
- b: Breite

## Patentansprüche

1. Kabelkanal für insbesondere elektrische Kabel und zur Aufnahme von Steckdosen, Schaltern und dergleichen an die Kabel anschließbaren Armaturen, mit einem etwa U-förmigen, aus einem Bodenstück (1) und an diesem beiderseits abgekanteten Seitenstücken (3) bestehenden Kanalbett (1-10) und einem oder mehreren Deckeln (28-30), mit denen das Kanalbett (1-10) zwischen den Armaturen verschließbar ist, wobei die Seitenstücke (3) an ihren freien Längskanten (4) jeweils zu mit dem Bodenstück (1) flächenparallelen Deckenstreifen (5) abgekantet sind, deren Endkanten (6) aufeinander zu gerichtet sind und eine schlitzförmige Aufnahme (7) für die Lagergehäuse (11-18) der Armaturen und die Deckel (28-30) begrenzen, wobei in der Aufnahme (7) zwischen den Lagergehäusen (11-18) jeweils eine oder mehrere Spannklammern (19-27) halterbar sind und die Spannklammern (19-27) mit Montageleisten (8) und jeweils mit einem lose zwischen den Montageleisten (8) angeordneten und an diesen anliegenden Deckel (28-30) verrastbar sind,
**dadurch gekennzeichnet, daß**
die Deckenstreifen (5) an ihren freien Längskanten (4) nach innen und in Richtung auf das Bodenstück (1) in die zueinander und zu den Seitenstücken (3) flächenparallele, in freien Randkanten (9) endende, dabei jeweils die schlitzförmige Aufnahme (7) ausbildende, ebene Montageleisten (8) abgekantet sind und in den Montageleisten (8) Durchbrüche (10) vorzugsweise in enger Teilung vorgesehen sind, in denen an den Lagergehäusen (11-18) und den Spannklammern (19-27) angeformte Raststücke (18,23a) einrastbar sind.

2. Kabelkanal nach Anspruch 1, **dadurch gekennzeichnet, daß** die Spannklammern (19-27) aus einem U-förmigen Mittelstück (19,29) mit einem Stegblech (20) und beiderseits gleichgerichtet abgekanteten, einander parallelen Gurtblechen (19) bestehen und an den Gurtblechen (19) jeweils mindestens eine elastische Rastlasche (23a) als Raststück angeformt ist.

3. Kabelkanal nach Anspruch 2, **dadurch gekennzeichnet, daß** die Rastlasche (23a) in Richtung auf das Stegblech (20) nach außen des Mittelstückes (19,20) und an einem von dem Gurtblech (19) abgekanteten Verbindungsstreifen (22) so abgebogen ist, daß sie von dem Gurtblech (19) beabstandet und zu diesem etwa parallel ist.

4. Kabelkanal nach Anspruch 2 oder 3, **dadurch gekennzeichnet, daß** an den Verbindungsstreifen (22) jeweils mindestens eine elastische Spannlasche (23b) in Richtung auf das Stegblech (20) nach außen des Mittelstückes (19, 20) so abgebogen ist, daß sie zu dem Gurtblech (19) etwa parallel ist und mit der Rastlasche (23a) einen Spalt (24) zur rastenden Aufnahme des Deckels (28-30) bildet.

5. Kabelkanal nach Anspruch 4, **dadurch gekennzeichnet, daß** der Spalt (24) die Montageleiste (8) überfängt und an dem Deckel (28-30) Randleisten (29) ausgebildet sind, die unmittelbar an den Montageleisten (8) anliegen.

6. Kabelkanal nach einem der Ansprüche 1 bis 5, **dadurch gekennzeichnet, daß** an den Lagergehäusen (11-18) Haltekeile (18) angeformt sind, welche als Raststücke dienen und so gerichtet sind, daß sie in Richtung auf das Bodenstück (1) in den Durchbrüchen (10) anschlagen, in Gegenrichtung aber aus den Durchbrüchen (10) abziehbar sind.

## Claims

1. A cable channel, in particular for electrical cables, and for incorporating outlets, switches and similar fittings that can be connected to the cable, with a roughly U-shaped channel bed (1-10) consisting of a floor piece (1) and side pieces (3) beveled on both sides thereon, and one or more covers (28-30), with which the channel bed (1-10) can be sealed between the fittings, wherein the free longitudinal edges (4) of the side pieces (3) are beveled to cover strips (5) respectively plane-parallel to the floor piece (1), whose end edges (6) are aligned toward each other and border a slotted receptacle (7) for the bearing casings (11-18) of the fittings and the covers (28-30), wherein a respective one or more retaining brackets (19-27) can be held in the receptacle (7) between the bearing casings (11-18), and the retaining brackets (19-27) can be latched with mounting strips (8) and with a respective cover (28-30) loosely arranged between and abutting the mounting strips (8), **characterized in that** the free longitudinal edges (4) of the cover strips (5) are inwardly beveled in the direction toward the floor piece (1) into flat mounting strips (8), which are plane-parallel to each other and to the side pieces (4) and end in free marginal edges (9), thereby respectively forming the slotted receptacle (7), and that the mounting strips (8) are provided with preferably narrowly divided holes (10), into which latching pieces (18, 23a) molded onto the bearing casings (11-18) and retaining brackets (19-27) can be latched.

2. The cable channel according to claim 1, **characterized in that** the retaining clamps (19-27) consist of a U-shaped middle piece (19, 29) with a web plate (20) and bilaterally aligned, beveled and mutually parallel flange plates (19), and that at least one respective elastic latching strap (23a) is molded onto the flange plates (19) as a latching piece.

3. The cable channel according to claim 2, **characterized in that** the latching strap (23a) is bent toward the web plate (20) outwardly from the middle piece (19, 20) and at a connecting strip (22) angled away from the flange plate (19) in such a way as to be spaced apart from and roughly parallel to the flange plate (19).

4. The cable channel according to claim 2 or 3, **characterized in that** at least one respective elastic clamping strap (23b) on the connecting strip (22) is bent toward the web plate (20) outwardly from the middle piece (19, 20) in such a way as to be roughly parallel to the flange plate (19) and form a gap (24) with the latching strap (23a) for latching in the cover (28-30).

5. The cable channel according to claim 4, **characterized in that** the gap (24) overlaps and engages the mounting strip (8), and that the cover (28-30) has edge strips (29) that immediately abut the mounting strips (8).

6. The cable channel according to one of claims 1 to 5, **characterized in that** retainers (18) are molded on to the bearing casings (11-18), which serve as latching pieces, and are aligned in such a way that they engage the holes (10) toward the floor piece (10), but can be removed from the holes (10).

## Revendications

1. Goulotte pour câbles, plus particulièrement pour câbles électriques, et destinée à recevoir des prises de courant, des interrupteurs et accessoires similaires raccordables aux câbles, comportant un lit de goulotte (1-10) à peu près en forme de U, formé par un fond (1) et des parties latérales (3) repliées sur les deux côtés dudit fond, et un ou plusieurs couvercles (28-30), par lesquels le lit de goulotte (1-10) peut être fermé entre les accessoires, les parties latérales (3) étant repliées au niveau de leurs bords longitudinaux (4) libres pour former des bandes de protection (5), planes et parallèles au fond (1) et dont les bords d'extrémité (6) sont orientés l'un vers l'autre et délimitent un logement (7) en forme de fente pour les boîtiers de logement (11-18) des accessoires et les couvercles (28-30), une ou plusieurs pinces de serrage (19-27) étant retenues dans le logement (7) entre les boîtiers de logement (11-18), les pinces de serrage (19-27) pouvant être bloquées avec des languettes de montage (8) et respectivement avec un couvercle (28-30) posé lâche entre les languettes de montage (8) et en appui contre celles-ci,
**caractérisée en ce que** les bandes de protection (5), au niveau de leurs bords longitudinaux (4) libres, sont repliées vers l'intérieur et en direction du fond (1) pour former les languettes de montage (8) plates, parallèles entre elles et parallèles aux parties latérales (3), se terminant par des arêtes de bordure (9) libres et formant respectivement le logement (7) en forme de fente, et **en ce que**, dans les languettes de montage (8) sont prévus des ouvertures (10), de préférence réparties à étroite distance les unes des autres, dans lesquelles des parties d'encliquetage (18, 23a) formées sur les boîtiers de logement (11-18) et les pinces de serrage (19-27) sont encliquetables.

2. Goulotte pour câbles selon la revendication 1, **caractérisée en ce que** les pinces de serrage (19-27) comprennent une partie centrale (19, 29) en forme de U avec une âme (20) et, de part et d'autre de celle-ci, des flancs (19) repliés dans le même sens et parallèles l'un à l'autre, et **en ce que**, sur chacun des flancs (19) est formée au moins une patte à encliqueter (23a) élastique formant une partie d'encliquetage.

3. Goulotte pour câbles selon la revendication 2, **caractérisée en ce que** la patte à encliqueter (23a) est coudée dans la direction de l'âme (20) vers l'extérieur de la partie centrale (19, 20) et au niveau d'une bande de jonction (22) repliée par rapport au flanc (19), de telle sorte que ladite patte à encliqueter est à distance du flanc (19) et est environ parallèle à celui-ci.

4. Goulotte pour câbles selon la revendication 2 ou 3, **caractérisée en ce qu'**au moins une patte de serrage (23b) élastique est coudée au niveau de chacune des bandes de jonction (22) dans la direction de l'âme (20) vers l'extérieur de la partie centrale (19, 20), de telle sorte qu'elle est environ parallèle au flanc (19) et forme avec la patte de encliqueter (23a) une fente (24) destinée à recevoir par encliquetage le couvercle (28-30).

5. Goulotte pour câbles selon la revendication 4, **caractérisée en ce que** la fente (24) recouvre la languette de montage (8) et **en ce que** sur le couvercle (28-30) sont formés des rebords (29) qui sont directement en appui sur les languettes de montage (8).

6. Goulotte pour câbles selon l'une quelconque des revendications 1 à 5, **caractérisée en ce que** sur les boîtiers de logement (11-18) sont formées des cales de retenue (18) qui font fonction de parties d'encliquetage et qui sont orientées de telle sorte que, vers le fond (1), elles viennent en butée dans les ouvertures (10), mais dans le sens opposé, elles peuvent être tirées hors des ouvertures (10).
